# EUROPÄISCHE PATENTSCHRIFT

(11) **EP 3 424 649 B1**
(45) Veröffentlichungstag und Bekanntmachung des Hinweises auf die Patenterteilung: **10.01.2024**
(21) Anmeldenummer: 18177597.4
(22) Anmeldetag: 13.06.2018
(51) Int. Cl.: B25J 5/02, B25J 19/06

(54) **BE- UND ENTLADEVORRICHTUNG UND VERFAHREN ZUM BETREIBEN EINER BE- UND ENTLADEVORRICHTUNG**
LOADING AND UNLOADING DEVICE AND METHOD FOR OPERATING A LOADING AND UNLOADING DEVICE
DISPOSITIF DE CHARGEMENT ET DE DÉCHARGEMENT ET PROCÉDÉ D'UTILISATION D'UN DISPOSITIF DE CHARGEMENT ET DE DÉCHARGEMENT

(30) Priorität: 07.07.2017 DE 102017115281
(43) Veröffentlichungstag der Anmeldung: 09.01.2019
(73) Patentinhaber: SW Automation GmbH, 88069 Tettnang (DE)
(72) Erfinder: Makis, Sven, 88085 Langenargen (DE); Kilic, Metin, 88048 Efrizweiler (DE)
(74) Vertreter: Schorr, Peter Karl

(56) Entgegenhaltungen:
- EP-A1- 2 186 761
- CN-B- 104 384 766
- CN-U- 202 499 554
- DE-A1- 3 320 969

## Beschreibung

Die Erfindung betrifft eine Be- und Entladevorrichtung, mit mindestens einem im Wesentlichen parallel zu einem Boden verlaufenden Träger, mit mindestens einem quer oder schräg zum Träger erstreckten Stützkörper, durch den der Träger zum Boden beabstandet festgelegt ist, mit mindestens einem am Träger angeordneten Schlittenkörper, mit mindestens einem Antrieb, zum Bewegen des Schlittenkörpers in einer entlang des Trägers verlaufenden Verfahrrichtung, mit mindestens einer Be- und Entladeeinrichtung, die am Schlittenkörper festlegbar oder festgelegt ist, mit mindestens einer Steuereinrichtung, die zumindest ein Bewegen des Antriebs und/oder der Be- und Entladeeinrichtung steuert und mit mindestens einer Begeheinrichtung, die mindestens einen treppen- oder stufenartigen Steigkörper, der sich zumindest in einer Arbeitsposition von Bodennähe bis wenigstens zum Träger erstreckt, und die mindestens ein Sperrmittel umfasst, das in einer Sperrstellung ein Begehen des Steigkörpers blockiert und das in einer Freigabestellung ein Begehen des Steigkörpers freigibt. Darüber hinaus betrifft die Erfindung ein Verfahren zum Betreiben einer derartigen Be- und Entladevorrichtung.

Be- und Entladevorrichtungen sind beispielsweise als Teil einer Werkstück-Bearbeitungs-Anlage bekannt, bei der mindestens eine Be- und Entladeeinrichtungen entlang des Trägers verfahrbar ist und vor einzelnen Werkzeugmaschinen positionierbar ist, um die jeweilige Werkzeugmaschine mit Werkstücken, Werkzeugen oder dergleichen zu bestücken oder zu beladen, oder um Werkstücke und Werkzeuge oder dergleichen aus der Werkzeugmaschine zu entnehmen.

Bei den bekannten Be- und Entladevorrichtungen sind die Träger durch Stützkörper zum Boden beabstandet. Um Wartungsarbeiten, beispielsweise am Schlittenkörper, am Antrieb und/oder an der Be- und Entladeeinrichtung durchführen zu können, umfassen die bekannten Be- und Entladevorrichtungen Begeheinrichtungen, bei der ein leiterähnlicher Steigkörper fest an der Be- und Entladevorrichtung so montiert ist, dass eine Bedienperson über den Steigkörper vom Boden bis zum Träger gelangen kann.

Um die Sicherheit des Bedienpersonals zu erhöhen, ist bei den bekannten Be- und Entladevorrichtungen ein türartiges Sperrmittel vorgesehen, das sich in einer Sperrstellung derart über den Steigkörper erstreckt, dass ein Begehen des Steigkörpers blockiert ist. Das Sperrmittel kann beispielsweise durch ein Schlüssel-Schlosssystem entsperrt und von der Sperrstellung in eine Freigabestellung überführt werden, in der das Sperrmittel ein Begehen des Steigkörpers freigibt. Hierdurch wird ein bewusstes Begehen des Steigkörpers gefördert und die Bedienperson daran erinnert den Antrieb und/oder die Be- und Entladeeinrichtung auszuschalten oder gegen ein Bewegen festzulegen.

Eine Be- und Entladevorrichtung nach dem Oberbegriff des Anspruchs 1 ist bekannt aus CN 202 499 554 U.

Eine Aufgabe eines Ausführungsbeispiels der Erfindung ist, eine Be- und Entladevorrichtung sowie ein Verfahren zum Betreiben einer derartigen Be- und Entladevorrichtung vorzuschlagen, bei der ein sicheres Begehen des Trägers durch eine Bedienperson vereinfacht ist.

Diese Aufgabe wird durch eine Be- umd Entladevorrichtung nach Anspruch 1 gelöst.

Dadurch, dass die Steuereinrichtung der Sicherheitseinrichtung der Be- und Entladevorrichtung funktional zugeordnet ist und dadurch, dass über das erste Sensormittel erfassbar ist, ob sich das Sperrmittel in der Sperrstellung oder in der Freigabestellung befindet, können/kann der Antrieb und/oder die Be- und Entladeeinrichtung automatisch gegen ein Bewegen festgelegt werden, sobald das Sperrmittel den Steigkörper freigibt.

Hierdurch kann auf ein zusätzliches Betätigen eines Schalters zum Ausschalten des Antriebs und/oder der Be- und Entladeeinrichtung oder zu deren Festlegen gegen eine Bewegung verzichtet werden, da Antrieb und/oder Be- und Entladeeinrichtung automatisch ausgeschaltet, bzw. gegen ein Bewegen festgelegt sind. Solchenfalls ist die Gefahr, dass eine Bedienperson vor dem Begehen des Trägers versehentlich und/oder unbeabsichtigt weder Antrieb noch Be- und Entladeeinrichtung ausschaltet reduziert und die Sicherheit beim Betreten des Trägers der Be- und Entladevorrichtung durch eine Bedienperson erhöht.

Durch das Geländer ist die Gefahr eines Sturzes der Bedienperson vom Träger reduziert.

Dadurch, dass das Geländer in einer Parkstellung - quer zur Verfahrrichtung betrachtet, überlappungsfrei zur Be- und Entladeeinrichtung angeordnet ist, ist ein ungehinderter Einsatz der Be- und Entladeeinrichtung in der Parkstellung des Geländers gewährleistet. Die Be- und Entladeeinrichtung wird beim Überführen des Steigkörpers von der Sperrstellung in die Freigabestellung ausgeschaltet oder gegen ein Bewegen festgelegt. Hierdurch behindert das Geländer in der Stützstellung die ausgeschaltete oder gegen ein Bewegen festgelegt Be- und Entladeeinrichtung nicht.

Die Be- und Entladevorrichtung kann beispielsweise Element einer Werkstück-Bearbeitungs-Anlage sein. Ferner kann die Be- und Entladeeinrichtung mehrachsig ausgebildet sein.

Der Schlittenkörper kann mittelbar oder unmittelbar am Träger angeordnet sein. Am Träger kann ein Führungsmittel ausgebildet sein, dass beispielsweise schienenartig ist und auf dem der Schlittenkörper in seiner Bewegung geführt entlang des Trägers bewegbar ist. Hierbei können Führungsmittel und Träger ein gemeinsames Bauteil umfassen oder als voneinander separierbare Bauteile ausgebildet sein.

Die Be- und Entladeeinrichtung kann mehrachsig ausgebildet sein oder eine entsprechende Achsenkinematik mit korrespondierenden Freiheitsgraden umfassen.

Das Sperrmittel der Sicherheitseinrichtung kann grundsätzlich beliebig ausgebildet sein. Es lässt sich einfach und kostengünstig realisieren, wenn das Sperrmittel einen tür- oder plattenartigen Flachkörper umfasst, der sich in der Sperrstellung derart über den Steigkörper erstreckt, dass die einzelnen treppen- oder stufenartigen Elemente des Steigkörpers nicht begehbar sind. Das erste Sensormittel kann grundsätzlich beliebig ausgebildet sein, so lange es die Funktion erfüllt, dass es ein Entfernen des Sperrmittels aus der Sperrstellung erfassen kann. Das erste Sensormittel kann beispielsweise unmittelbar am Sperrmittel oder am Steigkörper angeordnet sein.

Erfindungsgemäß ist die Begeheinrichtung lösbar oder unlösbar am Träger festlegbar und der Träger umfasst mindestens eine Aufnahme, in der oder an der der Steigkörper der Begeheinrichtung mit mindestens einem Festlegemittel der Sicherheitseinrichtung festlegbar ist.

Wenn die Begeheinrichtung lösbar am Träger festlegbar ist, kann sie separiert von der Be- und Entladevorrichtung bevorratet werden, wenn sie nicht benötigt wird. Hierdurch ist ein hindernisfreier Raum unter dem Träger der Be- und Entladevorrichtung erhöht.

Darüber hinaus ist es denkbar, dass der Träger mehrere Aufnahmen umfasst, in denen oder an denen der Steigkörper der Begeheinrichtung festlegbar ist. Solchenfalls ist es ermöglicht, dass die Bedienperson in unmittelbarer Nähe eines zu wartenden Bauteils oder einer zu wartenden Baugruppe auf den Träger gelangen kann, wodurch lange Strecken zum zu wartenden Bauteil vermieden werden können.

Das Festlegemittel kann einen Abschnitt des Steigkörpers oder ein separates Bauteil umfassen, das den Steigkörper mit der Aufnahme des Trägers verbindet.

In Weiterbildung letztgenannter Ausführungsform erweist es sich als vorteilhaft, wenn die Sicherheitseinrichtung mindestens ein im oder am Festlegemittel angeordnetes Riegelelement umfasst, welches in der Aufnahme arretierbar ist und einen Hintergriff bildet und welches beim Arretieren in der Aufnahme das Sperrmittel zum Überführen von der Sperrstellung in die Freigabestellung freigibt und/oder wenn die Sicherheitseinrichtung mindestens ein zweites Sensormittel umfasst, durch das ein Arretieren des Festlegemittels in der Aufnahme erfassbar und insbesondere durch ein Anzeigemittel anzeigbar ist.

Das Riegelelement kann mechanisch oder elektrisch angetrieben sein. Beispielsweise kann das Riegelelement durch Zug- oder Druckfedern in eine Arretierposition vorgespannt sein und beim Einführen des Festlegemittels in die Aufnahme zunächst in Richtung Steigkörper ausweichen, um dann in die vorgespannte Arretierposition zurückzukehren und dort mit der Aufnahme zu verrasten. Entsprechend kann das Riegelelement mit einem Freigabemittel, das beispielsweise am Steigmittel und insbesondere in Bodennähe bedienbar ist, verbunden sein, um aus der Arretierung wieder gelöst werden zu können. Dadurch, dass das Sperrmittel nur beim erfolgreichen, bzw. festgestellten Arretieren des Riegelelements des Festlegemittels in der Aufnahme freigegeben wird, ist der Steigkörper somit nur dann zum Begehen freigebbar, wenn der Steigkörper sicher am Träger festgelegt ist.

Das Anzeigemittel kann ein optisches oder akustisches Anzeigemittel umfassen. Beispielsweise kann das Anzeigemittel ein Leuchtelement umfassen. Dieses kann durch Leuchten in einer Farbe, beispielsweise rot, signalisieren dass der Steigkörper nicht in der Aufnahme festgelegt ist. Durch Leuchten in einer anderen Farbe, beispielsweise grün, kann ein Arretieren des Riegelelements des Festlegemittels in der Aufnahme signalisiert werden.

Bei einer Weiterbildung erweist es sich als vorteilhaft, wenn das Geländer automatisch oder manuell von der Parkstellung in die Stützstellung überführbar und darin festlegbar ist.

Wenn das Geländer automatisch von der Parkstellung in die Stützstellung überführbar und daran festlegbar ist, kann dieses beispielsweise beim Betätigen eines Schalters durch die Bedienperson oder durch Überführen des Sperrmittels von der Sperrstellung in die Freigabestellung erfolgen.

Das Geländer kann grundsätzlich in beliebiger Art und Weise von der Parkstellung in die Stützstellung überführbar sein. Hierbei erweist es sich als zweckmäßig, wenn das Geländer von der Parkstellung in die Stützstellung klappbar und/oder bereichsweise teleskopierbar ist und/oder dass das Geländer in der Parkstellung in einer Parkposition am Träger anordenbar und entlang des Trägers in die Stützstellung verfahrbar ist.

Wenn das Geländer von der Parkstellung in die Stützstellung klappbar und/oder bereichsweise teleskopierbar ist, kann das Geländer in der Parkstellung in unmittelbarer Nähe der Aufnahme angeordnet sein. Hierdurch liegt das Geländer dann kompakt am Träger an.

Wenn das Geländer in der Parkstellung in einer Parkposition am Träger anordenbar und entlang des Trägers in die Stützstellung verfahrbar ist, kann das Geländer beispielsweise an einem Ende des Trägers angeordnet sein, an dem die Be- und Entladeeinrichtung keine Tätigkeit ausführt. Hierdurch kann das Geländer einfach ausgebildet sein, wodurch es kostengünstig herstellbar ist.

Darüber hinaus ist es denkbar, dass das Geländer einen käfigartigen Abschnitt im Bereich der Aufnahme umfasst, der seitlich vom Träger weg erstreckt ist und zusammen mit dem Steigkörper im Bereich der Aufnahme eine Art Tunnel bildet, die die Bedienperson beim Aufstieg durchquert. Hierdurch ist die Bedienperson vor Erreichen der Aufnahme einerseits durch den Steigkörper und andererseits durch den käfigartigen Abschnitt umgeben, wodurch die Gefahr eines Abstürzens vom Steigkörper weiter reduziert ist.

Grundsätzlich ist es denkbar, dass die einzelnen Komponenten der Be- und Entladevorrichtung automatisch durch die Steuereinrichtung angesteuert werden. Beispielsweise kann das Sperrmittel nach erfolgreichem Arretieren des Riegelmittels in der Aufnahme zum Überführen von der Sperrstellung in die Freigabestellung automatisch frei gegeben werden. Beim Überführen des Sperrmittels von der Sperrstellung in die Freigabestellung kann dann der Antrieb die Be- und Entladeeinrichtung und/oder das Geländer derart ansteuern, dass der Antrieb und die Be- und Entladeeinrichtung ausgeschaltet oder gegen ein Bewegen festgelegt werden und dass das Geländer von der Parkstellung automatisch in die Stützstellung geführt wird.

Um die Sicherheit einer Bedienperson weiter zu erhöhen kann die Sicherheitseinrichtung mindestens eine parallel zum Träger erstreckten seil- oder kabelartigen Durchlaufeinrichtung umfassen, die eine zum Träger beabstandete Laufbahn, ein an der Laufbahn geführtes lasttragendes Element und ein am lasttragenden Element festgelegtes karabinerartiges Koppelmittel aufweist, das an einer Sitzgeschirreinrichtung einer Bedienperson festlegbar ist.

Solchenfalls kann die Durchlaufeinrichtung einen Latchway, einen Seilsteg oder dergleichen umfassen. Die Laufbahn kann ein Kabel umfassen, das parallel zum Träger gespannt ist und an dem das lasttragende Element bewegbar geführt ist.

Das lasttragende Element kann einen Karabiner oder eine Laufkatze oder dergleichen umfassen, mit dem das lasttragende Element an der Laufbahn führbar ist. Zudem kann das lasttragende Element einen flexibel biegbaren Abschnitt, wie Seil oder Kabel umfassen, das mit einem Ende am Karabiner, der Laufkatze oder dergleichen festgelegt ist und das mit dem anderen Ende am karabinerartigen Koppelmittel festlegbar ist.

Das lasttragende Element hat vorzugsweise eine Länge, die einen Sturz einer Bedienperson abfängt, ohne dass die Bedienperson den Boden berührt.

Darüber hinaus kann es bei einer Ausführungsform der Be- und Entladevorrichtung vorgesehen sein, dass die Sicherheitseinrichtung mindestens ein Bedienelement umfasst, durch das das Sperrmittel, das Festlegemittel, insbesondere das Riegelelement, der Antrieb, die Be- und Entladeeinrichtung und/oder das Geländer ansteuerbar sind.

Darüber hinaus ist es denkbar, dass das Anzeigemittel am Bedienelement angeordnet ist. Das Anzeigemittel kann solchenfalls optische und/oder akustische Anzeigemittel umfassen und den Status des jeweiligen Bauteils anzeigen.

Das Bedienelement kann am Steigkörper, an der Stütze oder frei beweglich, festgelegt sein.

Um ein Arbeiten auf dem Träger zu erleichtern und um die Be- und Entladeeinrichtung sicher passieren zu können, erweist es sich als vorteilhaft, wenn die Sicherheitseinrichtung mindestens ein plattenförmiges Trittmittel umfasst, das, zumindest in der Stützstellung des Geländers, die Be- und Entladeeinrichtung parallel zu der dem Boden abgewandten Oberfläche des Trägers überfängt.

Das plattenförmige Trittmittel ist hierbei in Höhe oder gering zum Schlittenkörper beabstandet angeordnet und bildet eine im Wesentlichen ebene Trittfläche für einen Bediener. Hierdurch ist die Gefahr, dass ein Bediener beim Passieren der Be- und Entladeeinrichtung stürzen oder stolpern kann oder die Be- und Entladeeinrichtung beschädigen kann reduziert.

Um ein die Sicherheit beim Arbeiten auf dem Träger weiter zu erhöhen, erweist es sich als vorteilhaft, wenn die Sicherheitseinrichtung mindestens ein die Rauigkeit erhöhendes Oberflächenelement umfasst, das auf der dem Boden abgewandten Oberfläche des Steigkörpers, des Trägers und/oder des Trittmittels, angeordnet ist.

Das Oberflächenelement kann ein gemeinsames Bauteil mit de Steigmittel, dem Trägers und/oder dem Trittmittels bilden oder als zusätzliches Bauteil oder als zusätzliche Beschichtung auf dem Steigmittel, auf dem Träger oder auf dem Trittmittel angeordnet sein. Durch Erhöhen der Rauigkeit ist ein Abrutschen einer Bedienperson reduziert.

Darüber hinaus wird die Aufgabe gelöst durch ein Verfahren zum Betreiben einer Sicherheitseinrichtung einer Be- und Entladevorrichtung, insbesondere mit mindestens einem der zuvor genannten Merkmale, mit den Schritten:
a. Erfassen durch ein erstes Sensormittel der Sicherheitseinrichtung, ob ein Sperrmittel einer Begeheinrichtung der Be- und Entladevorrichtung in einer Sperrstellung, in das Sperrmittel ein Begehen des Steigkörpers blockiert, oder in einer Freigabestellung, in der das Sperrmittel ein Begehen des Steigkörpers freigibt, angeordnet ist;
b. Blockieren eines Antriebs und/oder einer Be- und Entladeeinrichtung der Be- und Entladevorrichtung, wenn das Sperrmittel in der Freigabestellung angeordnet ist.

In Weiterbildung des Verfahrens erweist es sich als vorteilhaft, wenn das Verfahren nachfolgende Schritte umfasst:
a. Ggf. Anordnen des Steigkörpers an einem Träger und Festlegen des Steigkörpers durch ein Festlegemittel in oder an einer Aufnahme des Trägers;
b. Erfassen durch ein zweites Sensormittel, ob das Festlegemittel in der Aufnahme arretiert ist und Freigeben des Sperrmittels des Steigkörpers und/oder Freigeben des Steigkörpers, wenn ein Riegelelement des Festlegemittels in der Aufnahme arretiert;
c. Ggf. Anzeigen des Arretierens des Festlegemittels in der Aufnahme durch ein Anzeigemittel;

Unter der einleitenden Formulierung "Ggf." (gegebenenfalls), ist gemeint, dass dieser Schritt nicht zwingend notwendig ist.

Darüber hinaus erweist es sich als vorteilhaft, wenn das Verfahren folgenden Schritt umfasst:
Überführen eines am Träger, insbesondere bewegbar, festgelegten Geländers der Sicherheitseinrichtung von einer Parkstellung, in der das Geländer - quer zur Verfahrrichtung betrachtet - überlappungsfrei zur Be- und Entladeeinrichtung angeordnet ist, in eine Stützstellung; in der das Geländer einen Bereich um die Aufnahme zumindest abschnittsweise rahmenartig umgibt.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Be- und Entladevorrichtung und des Verfahrens zum Betreiben einer Werkstück-Bearbeitungs-Anlage.

In der Zeichnung zeigt:
- Figur 1: Eine perspektivische Seitenansicht auf ein Ausführungsbeispiel der Be- und Entladevorrichtung mit Begeheinrichtung und Geländer in einer Stützstellung;
- Figur 2: Eine perspektivische Seitenansicht des Ausführungsbeispiels gemäß Figur 1 mit Geländer in einer Parkstellung;
- Figur 3: Eine Draufsicht auf die Be- und Entladevorrichtung gemäß Figur 1;
- Figur 4: Ein schematisches Ablaufdiagramm des erfindungsgemäßen Verfahrens.

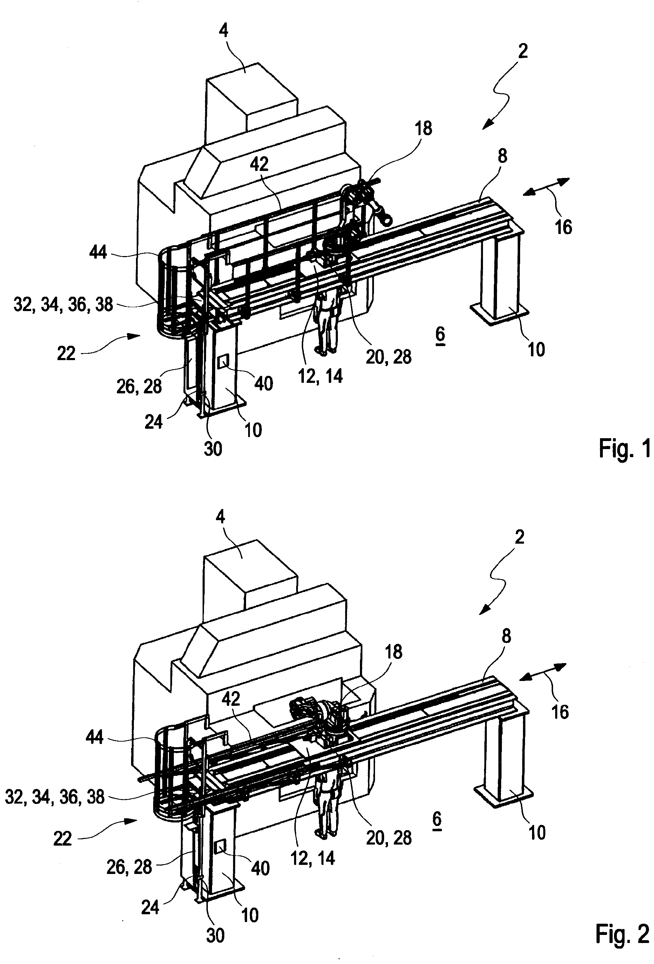

Die Figuren 1 bis 3 zeigen ein Ausführungsbeispiel einer insgesamt mit dem Bezugszeichen 2 versehenen Be- und Entladevorrichtung. Die Be- und Entladevorrichtung 2 kann Teil einer Werkstück-Bearbeitungs-Anlage sein und sich zwischen einer Mehrzahl von Werkzeugmaschinen 4 erstrecken.

Die Be- und Entladevorrichtung 2 umfasst einen im Wesentlichen parallel zu einem Boden 6 verlaufenden Träger 8. Der Träger 8 ist durch quer zum Träger 8 erstreckte Stützkörper 10 zum Boden 6 beabstandet festgelegt. Auf dem Träger 8 ist ein Schlittenkörper 12 angeordnet, auf dem ein Antrieb 14 festgelegt ist, der den Schlittenkörper 12 entlang des Trägers 8 in eine Verfahrrichtung 16 bewegt. Auf dem Schlittenkörper 12 ist eine Be- und Entladeeinrichtung 18 festgelegt. Durch die Be- und Entladeeinrichtung 18 ist es möglich, Werkstücke, Werkzeuge oder Dergleichen in der Werkzeugmaschine 4 anzuordnen oder aus der Werkzeugmaschine 4 zu entnehmen.

Darüber hinaus umfasst die Be- und Entladevorrichtung 2 eine Steuereinrichtung 20, die zumindest ein Bewegen des Antriebs 14 und/oder der Be- und Entladeeinrichtung 18 steuert.

Darüber hinaus umfasst die Be- und Entladevorrichtung 2 eine Begeheinrichtung 22, die einen stufenartigen Steigkörper 24 und ein Sperrmittel 26 umfasst. Der Steigkörper 24 erstreckt sich in einer Arbeitsposition von Bodennähe bis wenigstens hin zum Träger 8.

Figur 1 zeigt das Sperrmittel 26 in einer Freigabestellung, in der das Sperrmittel 26 den Steigkörper 24 zum Begehen freigibt. Hierdurch ist es einer Bedienperson ermöglicht, den Steigkörper 24 zu begehen.

Figur 2 zeigt das Sperrmittel 26 in einer Sperrstellung, in der ein Begehen des Steigkörpers 24 blockiert ist.

Das Sperrmittel 26 und die Steuereinrichtung 20 sind einer Sicherheitseinrichtung 28 funktional zugeordnet. Die Sicherheitseinrichtung 28 umfasst zudem ein erstes Sensormittel 30, durch das ein Überführen des Sperrmittels 26 von der Sperrstellung in die Freigabestellung erfassbar ist und das im Zusammenwirken mit der Steuereinrichtung 20 den Antrieb 14 und/oder die Be- und Entladeeinrichtung 18 beim Erfassen des Überführens des Sperrmittels 26 aus der Sperrstellung in die Freigabestellung gegen ein Bewegen festlegt.

Die Figuren 1 bis 3 zeigen ein Ausführungsbeispiel der Be- und Entladevorrichtung 2, bei der die Begeheinrichtung 22 lösbar am Träger 8 festgelegt ist.

Hierzu umfasst der Träger 8 eine Aufnahme 32, in der der Steigkörper 24 der Begeheinrichtung 22 mit einem Festlegemittel 34 der Sicherheitseinrichtung 28 festlegbar ist. Um die Begeheinrichtung 22 sicher in der Aufnahme 32 festzulegen, umfasst das Festlegemittel 34 ein Riegelelement 36, das in der Aufnahme arretiert.

Bei dem in den Figuren gezeigten Ausführungsbeispiel umfasst die Sicherheitseinrichtung 28 zudem ein zweites Sensormittel 38, durch das ein Arretieren des Festlegemittels 34 in der Aufnahme 32 erfassbar ist. Zudem kann das Arretieren des Festlegemittels 34 in der Aufnahme 32 durch ein Anzeigemittel 40 angezeigt werden.

Darüber hinaus umfasst das in den Figuren gezeigte Ausführungsbeispiel ein Geländer 42 der Sicherheitseinrichtung 28, das in Figur 1 in einer Stützstellung angeordnet ist, in der eine Bedienperson, die den Träger 8 betritt, durch das Geländer 42 gestützt ist.

Figur 2 zeigt das Geländer 42 in einer Parkstellung, in der das Geländer, quer zur Verfahrrichtung 16 gesehen - überlappungsfrei zur Be- und Entladeeinrichtung 18 angeordnet ist. Bei dem in den Figuren ersichtlichen Ausführungsbeispiel ist das Geländer 42 von der Parkstellung in die Stützstellung klappbar.

Darüber hinaus umfasst das Geländer 42 einen käfigartigen Abschnitt 44, der am oberen Ende des Steigkörpers 24 angeordnet ist und die Aufnahme 32 bogenförmig, bzw. halbkreisartig umgibt.

Figur 1 zeigt die Be- und Entladevorrichtung 2, bei der das Sperrmittel 26 in einer Freigabestellung angeordnet ist. Hierbei ist auch das Geländer 42 in einer Stützstellung angeordnet.

Figur 2 zeigt die Be- und Entladevorrichtung 2, bei der das Sperrmittel 26 in einer Sperrstellung angeordnet ist. Das Geländer 42 ist hierbei in einer Parkstellung angeordnet.

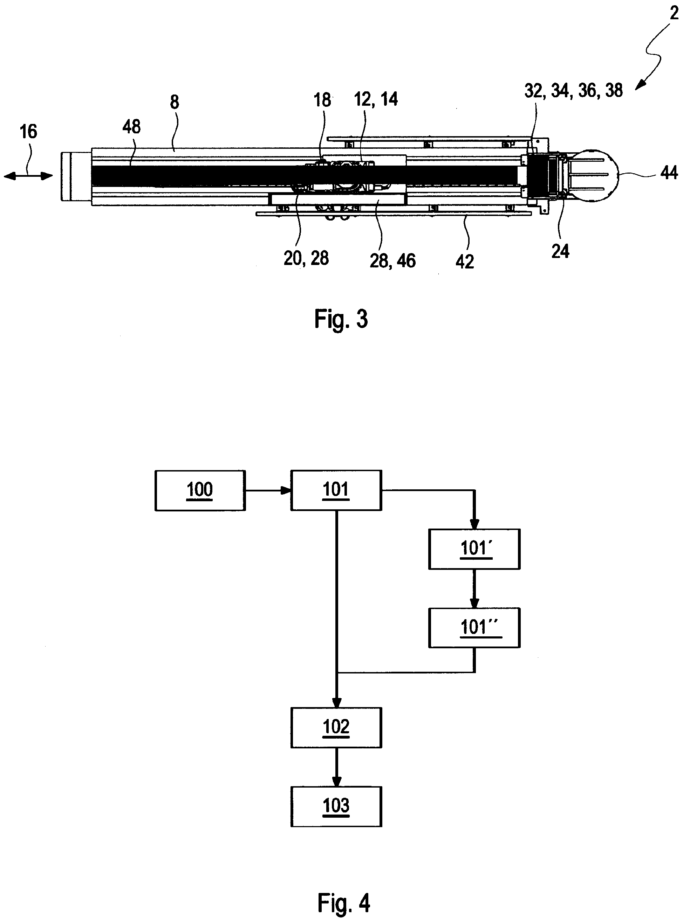

Figur 3 zeigt eine Draufsicht auf die Be- und Entladevorrichtung 2. Aus Figur 3 ist ersichtlich, dass die Sicherheitseinrichtung 28 ein plattenförmiges Trittmittel 46 umfasst, das zumindest in der Stützstellung des Geländers 42 die Be- und Entladeeinrichtung 18 parallel zu der dem Boden abgewandten Oberfläche des Trägers 8 überfängt. Hierdurch ist es einer Bedienperson ermöglicht, die Be- und Entladeeinrichtung 18 sicher zu passieren.

Darüber hinaus ist aus Figur 3 ersichtlich, dass die Be- und Entladevorrichtung 2 ein die Rauigkeit erhöhendes Oberflächenelement 48 umfasst, das auf der dem Boden abgewandten Oberfläche des Steigkörpers 24, des Trägers 8 und des Trittmittels 46 angeordnet ist. Durch das Oberflächenelement 48 ist die Rauigkeit der Oberfläche erhöht, wodurch ein Abrutschen einer Bedienperson beim Begehen des Steigkörpers 24, Trägers 8 und des Trittmittel 46 reduziert ist.

Anhand der schematischen Darstellung eines Verfahrens zum Betreiben der Sicherheitseinrichtung 28 der Be- und Entladevorrichtung 2, wird die Wirkungsweise der Sicherheitseinrichtung 28 näher erläutert.

In einem ersten Schritt 101 wird durch das erste Sensormittel 30 der Sicherheitseinrichtung 28 erfasst, ob das Sperrmittel 26 der Begeheinrichtung 22 in einer Sperrstellung, in der das Sperrmittel 26 ein Begehen des Steigkörpers 24 blockiert, oder in einer Freigabestellung, in der das Sperrmittel 26 ein Begehen des Steigkörpers 24 freigibt, angeordnet ist.

In einem nachfolgenden Schritt 102 wird der Antrieb 14 und/oder die Be- und Entladeeinrichtung 18 blockiert, wenn das Sperrmittel 26 in der Freigabestellung angeordnet ist. Dieses ist beispielsweise in Figur 1 gezeigt.

Dem Schritt 101 kann ggf. ein Schritt 100 vorangeschaltet sein, bei dem der Steigkörper 24 an dem Träger 8 angeordnet wird und der Steigkörper 24 durch das Festlegemittel 34 in der Aufnahme 32 festgelegt wird.
Dieser Schritt kann notwendig sein, wenn der Steigkörper 24 lösbar am Träger 8 festlegbar ist und vor dem Begehen des Trägers 8 erst am Träger 8 angeordnet werden muss.

Dem Schritt 102, können die Schritte 101' bis 101" vorangeschaltet sein. Bei einem Zwischenschritt 101' wird durch das zweite Sensormittel 38 zunächst erfasst, ob das Festlegemittel 34 in der Aufnahme 32 arretiert ist. Erst wenn ein Arretieren des Festlegemittels 34 in der Aufnahme 32 festgestellt ist, wird das Sperrmittel 26 des Steigkörpers 24 zum Überführen von der Sperrstellung in die Freigabestellung freigegeben.

Dem kann sich in einem Schritt 101" ein Anzeigen des Arretierens des Festlegemittels 34 in der Aufnahme 32 durch das Anzeigemittel 40 anschließen.

Schließlich kann ein Verfahrensschritt 103 vorgesehen sein, bei dem das Geländer 42 von der Parkstellung (Figur 2) in die Stützstellung (Figur 1) überführt wird.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein.

### Bezugszeichenliste

- 2: Be- und Entladevorrichtung
- 4: Werkzeugmaschine
- 6: Boden
- 8: Träger
- 10: Stützkörper
- 12: Schlittenkörper
- 14: Antrieb
- 16: Verfahrrichtung
- 18: Be- und Entladeeinrichtung
- 20: Steuereinrichtung
- 22: Begeheinrichtung
- 24: Steigkörper
- 26: Sperrmittel
- 28: Sicherheitseinrichtung
- 30: erstes Sensormittel
- 32: Aufnahme
- 34: Festlegemittel
- 36: Riegelelement
- 38: zweites Sensormittel
- 40: Anzeigemittel
- 42: Geländer
- 44: käfigartiger Abschnitt
- 46: Trittmittel
- 48: Oberflächenelement

- 100- 103: Verfahrensschritte

## Patentansprüche

1. Be- und Entladevorrichtung (2), mit mindestens einem im Wesentlichen parallel zu einem Boden (6) verlaufenden Träger (8), mit mindestens einem quer oder schräg zum Träger (8) erstreckten Stützkörper (10), durch den der Träger (8) zum Boden (6) beabstandet festgelegt ist, mit mindestens einem am Träger (8) angeordneten Schlittenkörper (12), mit mindestens einem Antrieb (14), zum Bewegen des Schlittenkörpers (12) in einer entlang des Trägers (8) verlaufenden Verfahrrichtung (16), mit mindestens einer Be- und Entladeeinrichtung (2), die am Schlittenkörper (12) festlegbar oder festgelegt ist, mit mindestens einer Steuereinrichtung (20), die zumindest ein Bewegen des Antriebs (14) und/oder der Be- und Entladeeinrichtung (18) steuert und mit mindestens einer Begeheinrichtung (22), die mindestens einen treppen- oder stufenartigen Steigkörper (24), der sich zumindest in einer Arbeitsposition von Bodennähe bis wenigstens zum Träger (8) erstreckt, wobei die Begeheinrichtung (22) lösbar oder unlösbar am Träger (8) festlegbar ist und wobei der Träger (8) mindestens eine Aufnahme (32) umfasst, in der oder an der der Steigkörper (24) der Begeheinrichtung (22) mit mindestens einem Festlegemittel (34) der Sicherheitseinrichtung (28) festlegbar ist, **dadurch gekennzeichnet, dass** die Begeheinrichtung (22) mindestens ein Sperrmittel (26) umfasst, das in einer Sperrstellung ein Begehen des Steigkörpers (24) blockiert und das in einer Freigabestellung ein Begehen des Steigkörpers (24) freigibt, und dass die Steuereinrichtung (20) und das Sperrmittel (26) einer Sicherheitseinrichtung (28) funktional zugeordnet sind, die mindestens ein erstes Sensormittel (30) umfasst, durch das ein Überführen des Sperrmittels (26) von der Sperrstellung in die Freigabestellung erfassbar ist, dass der Antrieb (14) und/oder die Be- und Entladeeinrichtung (18) beim Erfassen eines Überführens des Sperrmittels (26) aus der Sperrstellung des Sperrmittels (26) durch die Steuereinrichtung (20) der Sicherheitseinrichtung (28) gegen ein Bewegen festlegbar ist/sind und dass die Sicherheitseinrichtung (28) mindestens ein am Träger (8) bewegbar festlegbares Geländer (42) umfasst, das von einer Parkstellung, in der das Geländer (42) - quer zur Verfahrrichtung (16) der Be- und Enladeeinrichtung (18) betrachtet - überlappungsfrei zur Be- und Entladeeinrichtung (18) angeordnet ist, in eine Stützstellung überführbar ist, in der das Geländer (42) einen Bereich um die Aufnahme (32) zumindest abschnittsweise rahmenartig umgibt.

2. Be- und Entladevorrichtung (2) nach Anspruch 1, **dadurch gekennzeichnet, dass** die Sicherheitseinrichtung (28) mindestens ein im oder am Festlegemittel (34) angeordnetes Riegelelement (36) umfasst, welches in der Aufnahme (32) arretierbar ist und einen Hintergriff bildet und welches beim Arretieren in der Aufnahme (32) das Sperrmittels (26) zum Überführen von der Sperrstellung in die Freigabestellung freigibt und/oder dass die Sicherheitseinrichtung (28) mindestens ein zweites Sensormittel (38) umfasst, durch das ein Arretieren des Festlegemittels (34) in der Aufnahme (32) erfassbar und insbesondere durch ein Anzeigemittel (40) anzeigbar ist.

3. Be- und Entladevorrichtung (2) nach einem der vorhergehenden Ansprüche, **dadurch gekennzeichnet, dass** das Geländer (42) automatisch oder manuell von der Parkstellung in die Stützstellung überführbar und darin festlegbar ist.

4. Be- und Entladevorrichtung (2) nach einem der vorhergehenden Ansprüche, **dadurch gekennzeichnet, dass** das Geländer (42) von der Parkstellung in die Stützstellung klappbar und/oder bereichsweise teleskopierbar ist und/oder dass das Geländer (42) in der Parkstellung in einer Parkposition am Träger (8) anordenbar und entlang des Trägers (8) in die Stützstellung verfahrbar ist.

5. Be- und Entladevorrichtung (2) nach mindestens einem der vorhergehenden Ansprüche, **dadurch gekennzeichnet, dass** die Sicherheitseinrichtung (28) mindestens eine parallel zum Träger (8) erstreckten seil- oder kabelartigen Durchlaufeinrichtung umfasst, die eine zum Träger (8) beabstandete Laufbahn, ein an der Laufbahn geführtes lasttragendes Element und ein am lasttragenden Element festgelegtes karabinerartiges Koppelmittel aufweist, das an einer Sitzgeschirreinrichtung einer Bedienperson festlegbar ist.

6. Be- und Entladevorrichtung (2) nach mindestens einem der vorhergehenden Ansprüche, **dadurch gekennzeichnet, dass** die Sicherheitseinrichtung (28) mindestens ein Bedienelement umfasst, durch das das Sperrmittel (26), das Festlegemittel (34), insbesondere das Riegelelement (36), der Antrieb (14), die Be- und Entladeeinrichtung (18) und/oder das Geländer (42) ansteuerbar sind.

7. Be- und Entladevorrichtung (2) nach mindestens einem der vorhergehenden Ansprüche, **dadurch gekennzeichnet, dass** die Sicherheitseinrichtung (28) mindestens ein plattenförmiges Trittmittel (46) umfasst, das, zumindest in der Stützstellung des Geländers (42), die Be- und Entladeeinrichtung (18) parallel zu der dem Boden (6) abgewandten Oberfläche des Trägers (8) überfängt.

8. Be- und Entladevorrichtung (2) nach mindestens einem der vorhergehenden Ansprüche, **dadurch gekennzeichnet, dass** die Sicherheitseinrichtung (28) mindestens ein die Rauigkeit erhöhendes Oberflächenelement (48) umfasst, das auf der dem Boden (6) abgewandten Oberfläche des Steigkörpers (24), des Trägers (8) und/oder des Trittmittels (46), angeordnet ist.

9. Verfahren zum Betreiben einer Sicherheitseinrichtung (28) einer Be- und Entladevorrichtung (2) nach einem der Ansprüche 1 bis 8 mit den Schritten:
a. Erfassen durch ein erstes Sensormittel (30) der Sicherheitseinrichtung (28), ob ein Sperrmittel (26) einer Begeheinrichtung (22) der Be- und Entladevorrichtung (2) in einer Sperrstellung, in das Sperrmittel (26) ein Begehen des Steigkörpers (24) blockiert, oder in einer Freigabestellung, in der das Sperrmittel (26) ein Begehen des Steigkörpers (24) freigibt, angeordnet ist;
b. Blockieren eines Antriebs (14) und/oder einer Be- und Entladeeinrichtung (18) der Be- und Entladevorrichtung (2), wenn das Sperrmittel (26) in der Freigabestellung angeordnet ist.

10. Verfahren nach Anspruch 9, **gekennzeichnet durch** die Schritte:
a. Ggf Anordnen des Steigkörpers (24) an einem Träger (8) und Festlegen des Steigkörpers (24) durch ein Festlegemittel (34) in oder an einer Aufnahme des Trägers (8);
b. Erfassen durch ein zweites Sensormittel (38), ob das Festlegemittel (34) in der Aufnahme (32) arretiert ist und Freigeben des Sperrmittels (26) des Steigkörpers (24) und/oder Freigeben des Steigkörpers (24), wenn ein Riegelelement (36) des Festlegemittels (34) in der Aufnahme (32) arretiert;
c. Ggf. Anzeigen des Arretierens des Festlegemittels (34) in der Aufnahme (32) durch ein Anzeigemittel (40);

11. Verfahren nach Anspruch 9 oder 10, **gekennzeichnet durch** den Schritt
a. Überführen eines am Träger (8), insbesondere bewegbar, festgelegten Geländers (42) der Sicherheitseinrichtung (28) von einer Parkstellung, in der das Geländer (42) - quer zur Verfahrrichtung (16) betrachtet - überlappungsfrei zur Be- und Entladeeinrichtung (18) angeordnet ist, in eine Stützstellung; in der das Geländer (42) einen Bereich um die Aufnahme (32) zumindest abschnittsweise rahmenartig umgibt.

## Claims

1. Loading and unloading device (2), with at least one carrier (8) extending substantially parallel to a floor (6), with at least one supporting body (10) extending transversely or obliquely to the carrier (8), by means of which the carrier (8) is fixed at a distance from the floor (6), with at least one carriage body (12) arranged on the carrier (8), with at least one drive (14) for moving the carriage body (12) in a direction of travel (16) extending along the carrier (8), with at least one loading and unloading device (2) which can be fixed or is fixed to the carriage body (12), with at least one control device (20), which controls at least one movement of the drive (14) and/or the loading and unloading device (18) and with at least one access device (22), which has at least one stair-like or step-like climbing element (24), which extends at least in a working position from near the ground to at least the carrier (8), wherein the access device (22) can be detachably or nondetachably fixed to the carrier (8) and wherein the carrier (8) comprises at least one receptacle (32) in which or on which the climbing element (24) of the access device (22) can be fixed by at least one fixing means (34) of the safety device (28), **characterised in that** the access device (22) comprises at least one blocking means (26) which blocks access to the climbing element (24) in a locking position and releases access to the climbing element (24) in a release position, and **in that** the control device (20) and the blocking means (26) are functionally assigned to a safety device (28) which comprises at least one first sensor means (30) by means of which a transfer of the blocking means (26) from the blocking position to the release position can be detected, **in that** the drive (14) and/or the loading and unloading device (18) is/are lockable against movement by the control device (20) of the safety device (28) when a transfer of the blocking means (26) from the blocking position of the blocking means (26) is detected and **in that** the safety device (28) comprises at least one railing (42) which can be movably fixed to the carrier (8) and which can be transferred from a parking position, in which the railing (42) - viewed transversely to the direction of travel (16) of the loading and unloading device (18) - is arranged without overlapping the loading and unloading device (18), into a supporting position, in which the railing (42) surrounds an area around the receptacle (32) in a frame-like manner, at least in sections.

2. Loading and unloading device (2) according to claim 1, **characterised in that** the safety device (28) comprises at least one locking element (36) arranged in or on the fixing means (34), which can be locked in the receptacle (32) and forms a rear grip and which, when locked in the receptacle (32), releases the blocking means (26) for transferring from the locked position to the release position and/or **in that** the safety device (28) comprises at least one second sensor means (38), by means of which blocking of the fixing means (34) in the receptacle (32) can be detected and, in particular, can be indicated by an indicator means (40).

3. Loading and unloading device (2) according to one of the preceding claims, **characterised in that** the railing (42) can be transferred automatically or manually from the parking position to the support position and can be fixed therein.

4. Loading and unloading device (2) according to one of the preceding claims, **characterised in that** the railing (42) can be folded from the parking position into the support position and/or can be telescoped in sections and/or **in that** the railing (42) can be arranged in a parking position on the carrier (8) in the parking position and can be moved along the carrier (8) into the support position.

5. Loading and unloading device (2) according to at least one of the preceding claims, **characterised in that** the safety device (28) comprises at least one rope or cable-like passage device which extends parallel to the carrier (8) and has a track spaced from the carrier (8), a load-bearing element guided on the track and a carabiner-like coupling means which is fixed to the load-bearing element and can be secured to a seat harness device of an operator.

6. Loading and unloading device (2) according to at least one of the preceding claims, **characterised in that** the safety device (28) comprises at least one operating element by means of which the blocking means (26), the fixing means (34), in particular the locking element (36), the drive (14), the loading and unloading device (18) and/or the railing (42) can be controlled.

7. Loading and unloading device (2) according to at least one of the preceding claims, **characterised in that** the safety device (28) comprises at least one plate-like step means (46) which, at least in the supporting position of the railing (42), overlaps the loading and unloading device (18) parallel to the surface of the carrier (8) facing away from the floor (6).

8. Loading and unloading device (2) according to at least one of the preceding claims, **characterised in that** the safety device (28) comprises at least one surface element (48) which increases the roughness and is arranged on the surface of the climbing element (24), the support (8) and/or the step means (46) facing away from the floor (6).

9. Method for operating a safety device (28) of a loading and unloading device (2) according to one of claims 1 to 8, having the steps:
a. Detection by a first sensor means (30) of the safety device (28) whether a blocking means (26) of an access device (22) of the loading and unloading device (2) is arranged in a locking position, in which the blocking means (26) blocks access to the climbing element (24), or in a release position, in which the blocking means (26) releases access to the climbing element (24);
b. Blocking a drive (14) and/or a loading and unloading device (18) of the loading and unloading device (2) when the blocking means (26) is in the release position.

10. Method according to claim 9, **characterised by** the steps:
a. If necessary, arranging the climbing element (24) on a carrier (8) and fixing the climbing element (24) by a fixing means (34) in or on a receptacle of the carrier (8);
b. Detection by a second sensor means (38) of whether the fixing means (34) is locked in the receptacle (32) and release of the blocking means (26) of the climbing element (24) and/or release of the climbing element (24) when a locking element (36) of the fixing means (34) is locked in the receptacle (32);
c. If necessary, Indication of the blocking of the fixing means (34) in the receptacle (32) by an indicator means (40);

11. Method according to claim 9 or 10, **characterised by** the step
a. Transfer of a railing (42) of the safety device (28), in particular movably fixed to the carrier (8), from a parking position, in which the railing (42) - viewed transversely to the direction of travel (16) - is arranged without overlapping the loading and unloading device (18), into a supporting position; in which the railing (42) surrounds an area around the receptacle (32) in a frame-like manner at least in sections.

## Revendications

1. Dispositif de chargement et de déchargement (2), avec au moins un support (8) à la trajectoire essentiellement parallèle à un sol (6), avec au moins un plot d'appui (10) orienté transversalement ou en biais par rapport au support (8), grâce auquel le support (8) est fixé à l'écart du sol (6), avec au moins une coulisse (12) disposée sur le support (8), avec au moins un entraînement (14), pour déplacer la coulisse (12) dans un sens de déplacement (16) tout au long du support (8), avec au moins un dispositif de chargement et de déchargement (2), qui peut être fixé ou est fixé sur la coulisse (12), avec au moins un dispositif de commande (20), qui commande au moins un déplacement de l'entraînement (14) et/ou du dispositif de chargement et de déchargement (18), et avec au moins un dispositif d'accès (22) qui comprend au moins un élément à grimper (24) en forme de marches ou de gradins, qui s'étend au moins d'une position de travail au niveau du sol jusqu'au moins au support (8), le dispositif d'accès (22) pouvant être fixé de manière amovible ou permanente sur le support (8) et le support (8) comprenant au moins un logement (32) dans ou sur lequel l'élément à grimper (24) du dispositif d'accès (22) peut être fixé avec au moins un organe de fixation (34) du dispositif de sécurité (28), **caractérisé en ce que** le dispositif d'accès (22) comprend au moins un organe de calage (26) qui, dans une position bloquée, bloque l'accès à l'élément à grimper (24) et qui, dans une position libre, libère l'accès au corps montant (24) et **en ce que** le dispositif de commande (20) et l'organe de calage (26) interagissent avec un dispositif de sécurité (28) qui comprend au moins un premier capteur (30) grâce auquel un transfert de l'organe de calage (26) de la position bloquée à la position libre peut être détecté, **en ce que** l'entraînement (14) et/ou le dispositif de chargement et de déchargement (18) peut/peuvent être immobilisé(s) contre un déplacement lors de la détection du transfert de l'organe de calage (26) à partir de la position bloquée de l'organe de calage (26) par le dispositif de commande (20) du dispositif de sécurité (28) et **en ce que** le dispositif de sécurité (28) comprend au moins un garde-corps (42) pouvant être fixé de manière mobile sur le support (8), et pouvant passer d'une position de stationnement, où le garde-corps (42) - observé transversalement au sens de déplacement (16) du dispositif de chargement et de déchargement (18) - est disposé de manière à ne pas chevaucher dispositif de chargement et de déchargement (18), à une position d'appui, où le garde-corps (42) entoure une zone autour du logement (32) au moins par sections à la manière d'un cadre.

2. Dispositif de chargement et de déchargement (2) selon la revendication 1, **caractérisé en ce que** le dispositif de sécurité (28) comprend au moins un élément de verrouillage (36) disposé dans ou sur l'organe de fixation (34), qui peut être bloqué dans le logement (32) et forme une poignée arrière et qui, lors du blocage dans le logement (32), libère l'organe de calage (26) pour le faire passer de la position bloquée à la position libre et/ou **en ce que** le dispositif de sécurité (28) comprend au moins un deuxième capteur (38) grâce auquel un blocage de l'organe de fixation (34) dans le logement (32) peut être détecté, et en particulier indiqué par un indicateur (40).

3. Dispositif de chargement et de déchargement (2) selon l'une des revendications précédentes, **caractérisé en ce que** le garde-corps (42) peut être transféré automatiquement ou manuellement de la position de stationnement à la position d'appui et peut y être fixé.

4. Dispositif de chargement et de déchargement (2) selon l'une des revendications précédentes, **caractérisé en ce que** le garde-corps (42) peut être rabattu de la position de stationnement à la position d'appui et/ou peut être déployé par zones et/ou **en ce que** le garde-corps (42) peut être disposé dans la position de stationnement en position de repos sur le support (8) et peut être déplacé le long du support (8) jusqu'à la position d'appui.

5. Dispositif de chargement et de déchargement (2) selon au moins l'une des revendications précédentes, **caractérisé en ce que** le dispositif de sécurité (28) comprend au moins un dispositif de transfert en forme de câble ou de corde à la trajectoire parallèle au support (8), qui présente un chemin de roulement espacé du support (8), un élément porteur guidé sur le chemin de roulement et un coupleur en forme de mousqueton fixé à l'élément porteur, qui peut être fixé sur un système de harnais de sécurité d'un opérateur.

6. Dispositif de chargement et de déchargement (2) selon au moins l'une des revendications précédentes, **caractérisé en ce que** le dispositif de sécurité (28) comprend au moins un élément de commande par lequel l'organe de calage (26), l'organe de fixation (34), en particulier l'élément de verrouillage (36), l'entraînement (14), le dispositif de chargement et de déchargement (18) et/ou le garde-corps (42) peuvent être commandés.

7. Dispositif de chargement et de déchargement (2) selon au moins l'une des revendications précédentes, **caractérisé en ce que** le dispositif de sécurité (28) comprend au moins une passerelle (46) en forme de plateforme qui, au moins dans la position d'appui du garde-corps (42), enjambe le dispositif de chargement et de déchargement (18) parallèlement à la surface du support (8) opposée au sol (6).

8. Dispositif de chargement et de déchargement (2) selon au moins l'une des revendications précédentes, **caractérisé en ce que** le dispositif de sécurité (28) comprend au moins un élément de surface (48) augmentant la rugosité, qui est disposé sur la surface de l'élément à grimper (24), du support (8) et/ou de la passerelle (46) opposée au sol (6).

9. Procédé pour faire fonctionner un dispositif de sécurité (28) d'un dispositif de chargement et de déchargement (2) selon l'une quelconque des revendications 1 à 8, avec les étapes :
a. détecter grâce à un premier capteur (30) du dispositif de sécurité (28) si un organe de calage (26) d'un dispositif d'accès (22) du dispositif de chargement et de déchargement (2) est disposé dans une position bloquée, où l'organe de calage (26) bloque un accès à l'élément à grimper (24), ou dans une position libre, où l'organe de calage (26) libère un accès à l'élément à grimper (24) ;
b. bloquer un entraînement (14) et/ou un dispositif de chargement et de déchargement (18) du dispositif de chargement et de déchargement (2), lorsque l'organe (26) est disposé dans la position libre.

10. Procédé selon la revendication 9, **caractérisé par** les étapes :
a. le cas échéant, disposer l'élément à grimper (24) sur un support (8) et fixer l'élément à grimper (24) à l'aide d'un organe de fixation (34) dans ou sur un logement du support (8) ;
b. détecter à l'aide d'un deuxième capteur (38) si l'organe de fixation (34) est bloqué dans le logement (32) et libérer l'organe de calage (26) de l'élément à grimper (24) et/ou libérer l'élément à grimper (24) lorsqu'un élément de verrouillage (36) de l'organe de fixation (34) est bloqué dans le logement (32) ;
c. le cas échéant, indiquer le blocage de l'organe de fixation (34) dans le logement (32) à l'aide d'un indicateur (40) ;

11. Procédé selon la revendication 9 ou 10, **caractérisé par** l'étape
a. transférer un garde-corps (42) du dispositif de sécurité (28), fixé sur le support (8), en particulier de manière mobile, d'une position de stationnement, où le garde-corps (42) - observé transversalement au sens de déplacement (16) - est disposé de manière à ne pas chevaucher le dispositif de chargement et de déchargement (18), à une position d'appui, où le garde-corps (42) entoure une zone autour du logement (32) au moins par sections à la manière d'un cadre.
